# EUROPÄISCHE PATENTSCHRIFT

(11) **EP 1 710 145 B1**
(45) Veröffentlichungstag und Bekanntmachung des Hinweises auf die Patenterteilung: **18.02.2009**
(21) Anmeldenummer: 05014137.3
(22) Anmeldetag: 30.06.2005
(51) Int. Cl.: B61G 5/10, B60D 1/36, B60D 1/64

(54) **Einrichtung zum automatisierten Kuppeln**
Device for automatical coupling
Dispositif d'accouplement automatique

(30) Priorität: 09.04.2005 DE 202005005676 U
(43) Veröffentlichungstag der Anmeldung: 11.10.2006
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Rossbach, Joachim, 41747 Viersen (DE)
(74) Vertreter: DR. STARK & PARTNER

(56) Entgegenhaltungen:
- DE-B- 1 050 362
- DE-U- 1 965 574
- DE-U1- 29 909 937
- GB-A- 1 189 420
- US-A- 3 633 762

## Beschreibung

Die Erfindung betrifft eine Einrichtung zum automatisierten Kuppeln von elektrischen und/oder pneumatischen und/oder hydraulischen Verbindungen zwischen einem Anhängerfahrzeug und einer Zugmaschine, wobei eine Kupplungsvorrichtung zum Ankuppeln eines Anhängerfahrzeuges an der Zugmaschine vorgesehen ist, bei der am Heck der Zugmaschine ein Kuppelkörper mit einer Maulöffnung, in die eine Zugöse einer am Anhängerfahrzeug vorgesehenen Deichsel einführbar ist, und mit einem zur lösbaren Verriegelung betätigbaren und die Zugöse dann durchfassenden Kuppelbolzen vorgesehen ist.

Eine solche Einrichtung ist aus der DE-U-1965 574 bekannt.

Aus der Praxis sind derartige Einrichtungen bekannt, bei denen ein Teil an der Maulöffnung und der andere Teil an der Deichsel derart angebracht sind, dass beim translatorischen Einführen der zugöse in die Maulöffnung gleichzeitig die Steckverbindung für die elektrische und/oder pneumatische und/oder hydraulische Leitung hergestellt wird.

Nachteilig hierbei ist, dass insoweit entweder für ein automatisiertes Kuppeln eine sehr genaue und Fahrzeugausrichtung entsprechende fluchtende Ausrichtung von Zugmaschine und Anhängerfahrzeug erforderlich ist oder aber ein manuelles Ausrichten der Kupplungselemente vor Herstellen der Verbindung erfolgen muss. Dies bedingt jedoch wieder einen personellen Aufwand, der erfindungsgemäß zu vermeiden ist.

Aufgabe der Erfindung ist es, die vorgenannten Nachteile zu vermeiden und eine Möglichkeit anzugeben, mit der ein automatisiertes Kuppeln der jeweiligen Verbindung ohne manuelle Hilfstätigkeiten erfolgen kann.

Diese Aufgabe wird dadurch gelöst, dass zum automatisierten Kuppeln der elektrischen und/oder pneumatischen und/oder hydraulischen Verbindungen nach bereits hergestellter mechanischer Verbindung von Zugöse und Maulöffnung/Kuppelbolzen ein im Bereich des Kuppelkörpers angeordneter, kraftbetätigt seitlich verschwenkbarer und bei abgekuppeltem Anhängerfahrzeug in eine Ruheposition an das Heck der Zugmaschine heranschwenkbarer Verbindungsarm im Bereich des Kuppelkörpers vorgesehen ist, der endseitig eine mit einem an der Deichsel vorgesehenen Kontaktelement zusammenwirkende Kontakteinrichtung zur Herstellung der beabsichtigten Verbindung durch Inkontaktbringen von Kontaktelement und Kontakteinrichtung aufweist, wobei das Kontaktelement und die Kontakteinrichtung wiederum jeweils über entsprechende Anschlüsse weiterverbunden sind. Hierdurch kann - unabhängig von der mechanischen Belastung, die durch das mechanische Ankuppeln des Anhängerfahrzeugs an die Zugmaschine, welches durch Heranfahren der Zugmaschine an die Deichsel des Anhängerfahrzeugs bewirkt wird - die elektrische und/oder hydraulische und/oder pneumatische Verbindung ohne übermäßige mechanische Belastung hergestellt werden, da bereits eine starre Verbindung gegeben ist. Vorzugsweise kann/können das Kontaktelement und/oder die Kontakteinrichtung zur Zentrierung angeschrägte Seitenbereiche aufweisen, so dass auch bei einem nicht genauen Treffen des Kontaktelementes durch die Kontakteinrichtung, z. B. aufgrund von unebenen Untergrund oder dergleichen, die Verbindung ordnungsgemäß hergestellt werden kann.

Erfindungsgemäß kann die Verbindungsrichtung von Kontaktelement und Kontakteinrichtung entsprechend der Schwenkrichtung des Verbindungsarms ausgerichtet sein, so dass am Ende der Schwenkbewegung ein automatisches Herstellen der Verbindung erfolgt.

Alternativ kann die Verbindungsrichtung von Kontaktelement und Kontakteinrichtung auch orthogonal zur Schwenkrichtung des Verbindungsarms ausgerichtet sein. Dabei kann/können das Kontaktelement und/oder die Kontakteinrichtung in Verbindungsrichtung aufeinander zu bewegbar ausgebildet sein, so dass in einem ersten Schritt die Kontakteinrichtung an das Kontaktelement herangeschwenkt wird und in einem zweiten Schritt durch translatorische, in radialer Richtung erfolgende Verlagerung die Verbindung hergestellt wird.

Auch kann die Verbindungsrichtung von Kontaktelement und Kontakteinrichtung orthogonal zur durch die Schwenkrichtung des Verbindungsarms bestimmte Ebene ausgerichtet sein. Dabei kann zumindest die Kontakteinrichtung, insbesondere der gesamte Verbindungsarm in Verbindungsrichtung verlagerbar, insbesondere schwenkbar ausgebildet sein, so dass ebenfalls in einem ersten Schritt die Kontakteinrichtung an das Kontaktelement herangeschwenkt wird und in einem zweiten Schritt durch translatorische Verlagerung von Kontaktelement und/oder Kontakteinrichtung oder aber durch entsprechendes Verschwenken des Verbindungsarms in der erforderlichen Richtung die Verbindung hergestellt werden kann.

Vorzugsweise kann die Kontakteinrichtung lösbar am Verbindungsarm angebracht sein, so dass in einem ersten Schritt die Verbindung hergestellt wird und danach durch Lösen der Kontakteinrichtung vom Verbindungsarm ein Zurückverschwenken des Verbindungsarms in seine Ruheposition erfolgen kann. Dadurch entfällt eine Zwangsführung und der Verbindungsarm ist während des Fahrbetriebs keinerlei mechanischen Belastungen unterworfen.

Alternativ kann zumindest eine Bewegungsrichtung des Verbindungsarms für eine freie Verschwenkbarkeit während des Fahrbetriebs freigängig schaltbar sein, so dass ebenfalls keine mechanischen Belastungen des Verbindungsarms resultieren.

Bei einem bevorzugten Ausführungsbeispiel kann der Verbindungsarm ober- oder unterhalb des Kuppelkörpers vorgesehen sein und die Drehachse der Zugöse und die Schwenkachse des Verbindungsarms miteinander fluchten, so dass bei nicht gelöstem Verbindungsarm keinerlei Spannungszustände durch ungleiche Verlagerung von Verbindungsarm und Deichsel erfolgen können.

Erfindungsgemäß kann der Verbindungsarm in etwa s-förmig gekrümmt ausgebildet sein und die Rückseite der Kontakteinrichtung bei eingeschwenktem Verbindungsarm in der Ruheposition zumindest in etwa am Heck der Zugmaschine anliegen, so dass auch bei am Heck hervorstehend angeordneter Lagerung der Drehachse des Verbindungsarms die entsprechend ausgebildete Kontakteinrichtung in der Ruheposition des Verbindungsarms derart angeordnet sein kann, dass sie nicht oder zumindest nicht weiter als die Verbindungsvorrichtung gegenüber dem Heck der Zugmaschine hervorsteht.

Vorzugsweise kann der Antrieb zum Verschwenken des Verbindungsarms als eine kraftbetätigt verlagerbare Zahnstange, die ein mit dem Verbindungsarm zusammenwirkendes, insbesondere an dem Verbindungsarm angebrachtes Zahnradsegment antreibt, ausgebildet sein, wobei insbesondere das an der Zugmaschine verschwenkbar angeordnete Ende des Verbindungsarms als Zahnradsegment ausgebildet sein kann.

Durch einen Drehwinkelsensor kann vor Verschwenken des Verbindungsarms die genaue Ausrichtung von Zugmaschine und Anhängerfahrzeug bestimmt werden, so dass ein genaues Ansteuern des Verbindungsarms erfolgen kann und insoweit unnötige Belastungen durch den Versuch eines weiteren Verschwenkens nach Herstellen der Verbindung vermieden werden. Dabei kann der Antrieb vorzugsweise hydraulisch oder pneumatisch ausgebildet sein, so dass durch Nutzung der sowieso an der Zugmaschine vorhandenen Antriebsressourcen ein einfacher Antrieb ohne unnötige Vorrichtung erfolgen kann. Alternativ kann der Antrieb auch elektrisch ausgebildet sein.

Im Folgenden werden in der Zeichnung dargestellte Ausführungsbeispiele der Erfindung erläutert. Es zeigen:
- Fig. 1: eine Draufsicht auf ein erstes Ausführungsbeispiel einer erfindungsgemäßen Einrichtung zum automatisierten Kuppeln.
- Fig. 2: eine Seitenansicht des Gegenstandes nach Fig. 1.
- Fig. 3: den Gegenstand nach Fig. 2 mit abgesenktem Verbindungsarm.
- Fig. 4: den Gegenstand nach Fig. 3 mit gelöster Kontakteinrichtung.
- Fig. 5: ein zweites Ausführungsbeispiel einer erfindungsgemäßen Einrichtung zum automatisierten Kuppeln.
- Fig. 6: ein weiteres Ausführungsbeispiel einer erfindungsgemäßen Ausführung zum automatisierten Kuppeln und
- Fig. 7: eine Seitenansicht des Gegenstandes nach Fig. 6.

In allen Figuren werden für gleiche bzw. gleichartige Bauteile übereinstimmende Bezugszeichen verwendet.

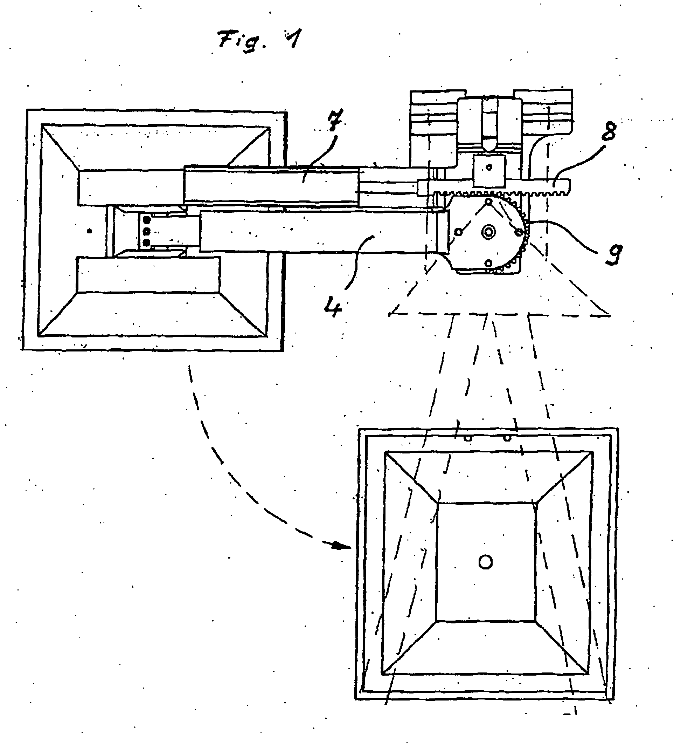

Fig. 1 zeigt eine Einrichtung 1 zum automatisierten Kuppeln von in den Zeichnungen nicht konkret dargestellten elektrischen und/oder pneumatischen und/oder hydraulischen Verbindungen zwischen einem Anhängerfahrzeug und einer Zugmaschine.

Dabei ist die Zugmaschine mit einer Kupplungsvorrichtung zum Ankuppeln eines Anhängerfahrzeugs versehen und am Heck der Zugmaschine ist ein Kuppelkörper mit einer Maulöffnung 2 vorgesehen, in den eine Zugöse einer am Anhängerfahrzeug vorgesehenen Deichsel 3 einführbar ist, wobei zur lösbaren Verriegelung ein betätigbarer und die Zugöse dann durchfassender Kuppelbolzen vorgesehen ist.

Die Einrichtung 1 ist derart ausgebildet, dass die herzustellenden Verbindungen erst nach bereits hergestellter mechanischer Verbindung von Zugöse und Maulöffnung 2 sowie Kuppelbolzen erfolgt. Hierzu ist ein im Bereich des Kuppelkörpers angeordneter und kraftbetätigt seitlich verschwenkbarer Verbindungsarm 4 am Heck der Zugmaschine angeordnet, der bei abgekuppeltem Anhängerfahrzeug in eine Ruheposition an das Heck der Zugmaschine heranschwenkbar ist. Der Verbindungsarm 4 ist danach mit seinem einen Ende schwenkbar an der Zugmaschine angebracht und an seinem anderen Ende ist eine Kontakteinrichtung 5 vorgesehen, die mit einem an der Deichsel 3 angeordneten Kontaktelement 6 zusammenwirkend die Verbindung gewährleistet, indem Kontakteinrichtung 5 und Kontaktelement 6 in Kontakt gebracht werden. Das Kontaktelement 6 und die Kontakteinrichtung 5 sind wiederum jeweils über entsprechende, in der Zeichnung nicht dargestellte Anschlüsse mit den jeweiligen weiteren Einrichtungen am Anhängerfahrzeug bzw. an der Zugmaschine verbunden.

Wie aus Fig. 1 ersichtlich, kann der Verbindungsarm 4 kraftbetätigt aus seiner Ruheposition in eine Position zur Herstellung der Verbindung verschwenkt werden, wobei hierfür ein Pneumatikzylinder 7 vorgesehen ist, der über eine Zahnstange 8 mit einem Zahnradsegment 9 am Verbindungsarm 4 zusammenwirkt.

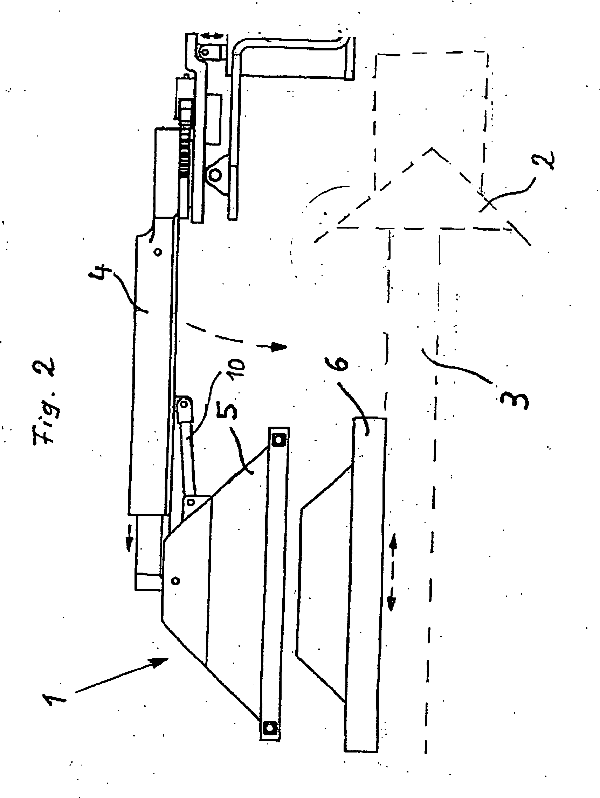

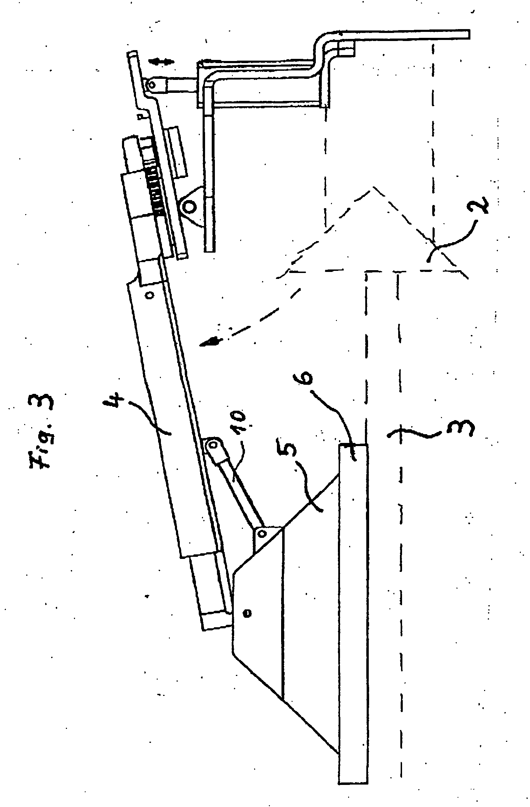

Bei dem in den Fig. 1 bis 4 dargestellten Ausführungsbeispiel der Erfindung wird insoweit die Kontakteinrichtung 5 bis in eine Position oberhalb des Kontaktelementes 6 verschwenkt und die Verbindung wird dann durch Absenken des auch vertikal' verschwenkbaren Verbindungsarms 4 hergestellt. Dabei weisen sowohl Kontakteinrichtung 5 als auch Kontaktelement 6 abgeschrägte Seitenkanten auf, um somit eine automatische Zentrierung auch bei nicht ganz genau erfolgter Verschwenkung zu gewährleisten.

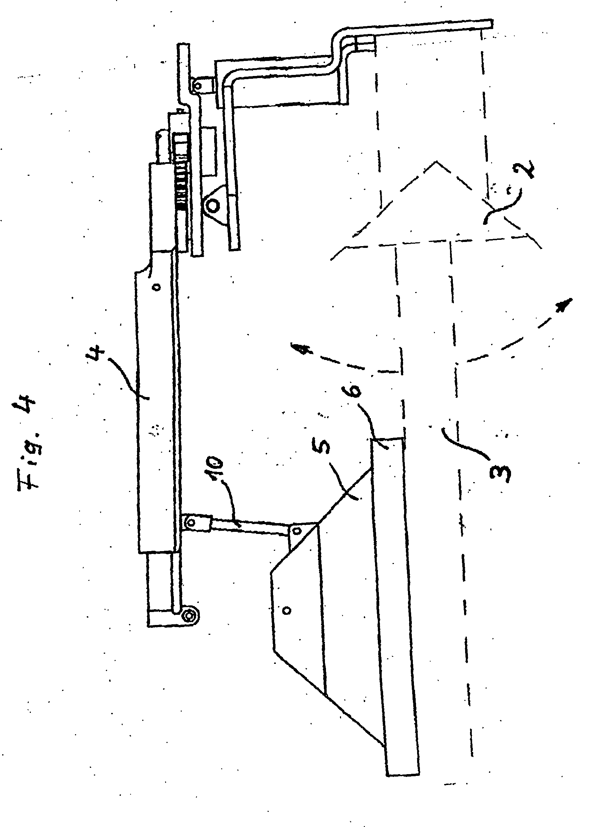

Wie aus Fig. 4 ersichtlich, ist die Kontakteinrichtung 5 lösbar am Verbindungsarm 4 angebracht, wobei ein entsprechender Anschluss 10 als Verbindung zwischen Kontakteinrichtung 5 und Verbindungsarm 4 auch in gelöstem Zustand verbleiben kann.

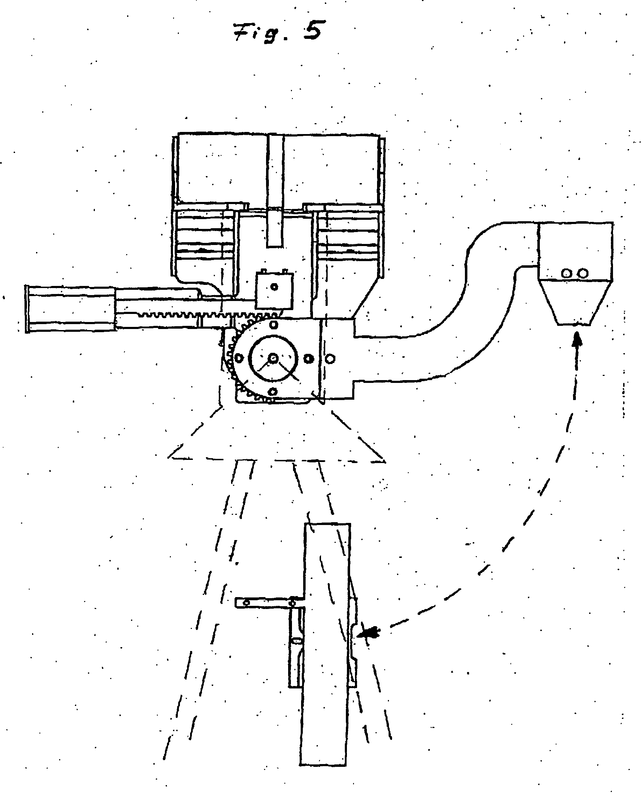

Bei der in Fig. 5 dargestellten Ausführungsvariante der erfindungsgemäßen Einrichtung 1 ist der Verbindungsarm 4 ebenfalls oberhalb der Maulöffnung 2 angeordnet und die Drehachse der Zugöse und die Schwenkachse des Verbindungsarms 4 fluchten ebenfalls miteinander.

Der Verbindungsarm 4 ist in etwa s-förmig gekrümmt ausgebildet und die Rückseite der Kontakteinrichtung (5) liegt - wenn der Verbindungsarm 4 in seine Ruheposition an das Heck der Zugmaschine herangeschwenkt ist - ebenfalls am Heck der Zugmaschine an. Insoweit steht die Kontakteinrichtung 5 bei eingeschränktem Verbindungsarm 4 nicht weiter als die Maulöffnung 2 über das Heck der Zugmaschine hinaus.

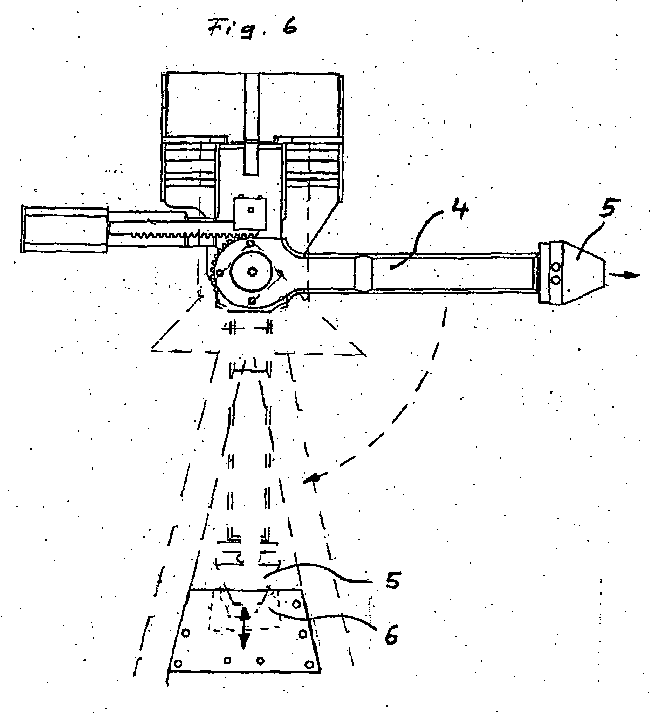

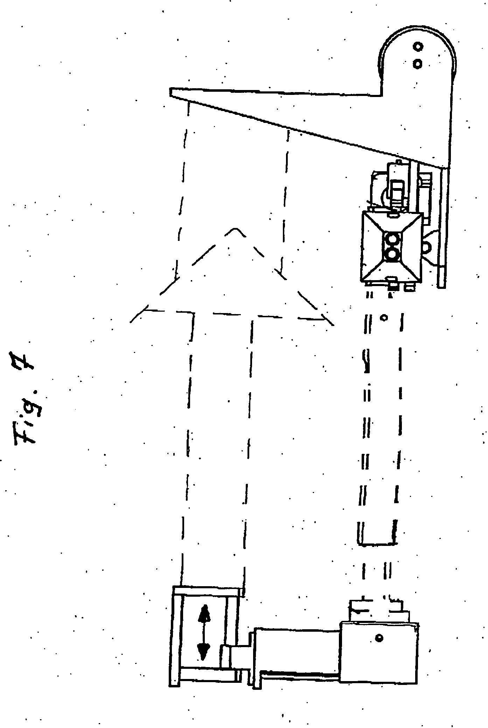

Bei dem in den Figuren 6 und 7 dargestelltem weiteren Ausführungsbeispiel einer erfindungsgemäßen Einrichtung 1 ist die Einrichtung 1 unterhalb der Maulöffnung 2 angeordnet. Durch Verschwenken des Verbindungsarms 4 kann die Kontakteinrichtung 5 bis in eine Position unmittelbar vor dem Kontaktelement 6 verschwenkt werden. Anschließend wird die gewünschte Verbindung entweder durch translatorische Verlagerung des Kontaktelementes 6 und/oder der Kontakteinrichtung 5 hergestellt. Im dargestellten Ausführungsbeispiel ist das Kontaktelement translatorisch verlagerbar an der Deichsel 3 angeordnet.

## Patentansprüche

1. Einrichtung (1) zum automatisierten Kuppeln von elektrischen und/oder pneumatischen und/oder hydraulischen Verbindungen zwischen einem Anhängerfahrzeug und einer Zugmaschine, wobei eine Kupplungsvorrichtung zum Ankuppeln eines Anhängerfahrzeuges an der Zugmaschine vorgesehen ist, bei der am Heck der Zugmaschine ein Kuppelkörper mit einer Maulöffnung (2), in die eine Zugöse einer am Anhängerfahrzeug vorgesehenen Deichsel (3) einführbar ist, und mit einem zur lösbaren Verriegelung betätigbaren und die Zugöse dann durchfassenden Kuppelbolzen vorgesehen ist, **dadurch gekennzeichnet, dass** zum automatisierten Kuppeln der elektrischen und/oder pneumatischen und/oder hydraulischen Verbindungen nach bereits hergestellter mechanischer Verbindung von Zugöse und Maulöffnung/Kuppelbolzen ein im Bereich des Kuppelkörpers angeordneter, kraftbetätigt seitlich verschwenkbarer und bei abgekuppeltem Anhängerfahrzeug in eine Ruheposition an das Heck der Zugmaschine heranschwenkbarer Verbindungsarm (4) im Bereich des Kuppelkörpers vorgesehen ist, der endseitig eine mit einem an der Deichsel vorgesehenen Kontaktelement (6) zusammenwirkende Kontakteinrichtung (5) zur Herstellung der beabsichtigten Verbindung durch Inkontaktbringen von Kontaktelement (6) und Kontakteinrichtung (5) aufweist, wobei das Kontaktelement (6) und die Kontakteinrichtung (5) wiederum jeweils über entsprechende Anschlüsse weiterverbunden sind.

2. Einrichtung nach Anspruch 1, **dadurch gekennzeichnet, dass** das Kontaktelement (6) und/oder die Kontakteinrichtung (5) zur Zentrierung angeschrägte Seitenbereiche aufweist/aufweisen.

3. Einrichtung nach Anspruch 1 oder 2, **dadurch gekennzeichnet, dass** die Verbindungsrichtung von Kontaktelement (6) und Kontakteinrichtung (5) entsprechend der Schwenkrichtung des Verbindungsarms (4) ausgerichtet ist.

4. Einrichtung nach Anspruch 1 oder 2, **dadurch gekennzeichnet, dass** die Verbindungsrichtung von Kontaktelement (6) und Kontakteinrichtung (5) orthogonal zur Schwenkrichtung des Verbindungsarms (4) ausgerichtet ist.

5. Einrichtung nach Anspruch 4, **dadurch gekennzeichnet, dass** das Kontaktelement (6) und/oder die Kontakteinrichtung (5) in Verbindungsrichtung aufeinander zu bewegbar ausgebildet ist/sind.

6. Einrichtung nach Anspruch 1 oder 2, **dadurch gekennzeichnet, dass** die Verbindungsrichtung von Kontaktelement (6) und Kontakteinrichtung (5) orthogonal zur durch die Schwenkrichtung des Verbindungsarms (4) bestimmte Ebene ausgerichtet ist.

7. Einrichtung nach Anspruch 6, **dadurch gekennzeichnet, dass** zumindest die Kontakteinrichtung (5), insbesondere der gesamte Verbindungsarm (4) in Verbindungsrichtung verlagerbar, insbesondere schwenkbar ausgebildet ist.

8. Einrichtung nach einem der Ansprüche 1 bis 7, **dadurch gekennzeichnet, dass** die Kontakteinrichtung (5) lösbar am Verbindungsarm (4) angebracht ist.

9. Einrichtung nach einem der Ansprüche 1 bis 8, **dadurch gekennzeichnet, dass** zumindest eine Bewegungsrichtung des Verbindungsarms (4) für eine freie Verschwenkbarkeit während des Fahrbetriebs freigängig schaltbar ist.

10. Einrichtung nach einem der Ansprüche 1 bis 9, **dadurch gekennzeichnet, dass** der Verbindungsarm (4) ober- oder unterhalb des Kuppelkörpers vorgesehen ist und die Drehachse der Zugöse und die Schwenkachse des Verbindungsarms (4) miteinander fluchten.

11. Einrichtung nach einem der Ansprüche 1 bis 10, **dadurch gekennzeichnet, dass** der Verbindungsarm (4) in etwa s-förmig gekrümmt ausgebildet ist und die Rückseite der Kontakteinrichtung (5) bei eingeschwenktem Verbindungsarm (4) in der Ruheposition zumindest in etwa am Heck der Zugmaschine anliegt.

12. Einrichtung nach einem der Ansprüche 1 bis 12, **dadurch gekennzeichnet, dass** der Antrieb zum Verschwenken des Verbindungsarms (4) als eine kraftbetätigt verlagerbare Zahnstange (8), die ein mit dem Verbindungsarm zusammenwirkendes, insbesondere an dem Verbindungsarm angebrachtes Zahnradsegment (9) antreibt, ausgebildet ist.

13. Einrichtung nach einem der Ansprüche 1 bis 12, **dadurch gekennzeichnet, dass** der Antrieb hydraulisch oder pneumatisch ausgebildet ist.

## Claims

1. Device (1) for the automated coupling of electric and/or pneumatic and/or hydraulic connections between a trailer vehicle and a towing vehicle, a coupling mechanism for coupling a trailer vehicle to the towing vehicle being provided, in the case of which device a coupling body with a mouth opening (2), into which a drawbar eye of a drawbar (3) provided on the trailer vehicle can be introduced, and with a coupling bolt which can be actuated for the releasable locking and then reaches through the drawbar eye is provided at the rear of the towing vehicle, **characterized in that** for the automated coupling of the electric and/or pneumatic and/or hydraulic connections after a mechanical connection between drawbar eye and mouth opening/coupling bolt has already been produced, a connecting arm (4) which is arranged in the region of the coupling body, can be pivoted laterally when actuated by a force and, when the trailer vehicle is uncoupled, can be pivoted into a rest position on the rear of the towing vehicle, is provided in the region of the coupling body, the end side of the connecting arm having a contact device (5), which interacts with a contact element (6) provided on the drawbar, for producing the intended connection by bringing contact element (6) and contact device (5) into contact, the contact element (6) and the contact device (5) in turn being further connected in each case via corresponding connections.

2. Device according to Claim 1, **characterized in that** the contact element (6) and/or the contact device (5) has/have bevelled side regions for centring purposes.

3. Device according to Claim 1 or 2, **characterized in that** the connecting direction of contact element (6) and contact device (5) is oriented in accordance with the pivoting direction of the connecting arm (4).

4. Device according to Claim 1 or 2, **characterized in that** the connecting direction of contact element (6) and contact device (5) is oriented orthogonally to the pivoting direction of the connecting arm (4).

5. Device according to Claim 4, **characterized in that** the contact element (6) and/or the contact device (5) is/are designed in a manner such that they can be moved towards each other in the connecting direction.

6. Device according to Claim 1 or 2, **characterized in that** the connecting direction of contact element (6) and contact device (5) is oriented orthogonally to the plane determined by the pivoting direction of the connecting arm (4).

7. Device according to Claim 6, **characterized in that** at least the contact device (5), in particular the entire connecting arm (4), is designed in a manner such that it can be displaced, in particular pivoted, in the connecting direction.

8. Device according to one of Claims 1 to 7, **characterized in that** the contact device (5) is fitted releasably to the connecting arm (4).

9. Device according to one of Claims 1 to 8, **characterized in that** at least one direction of movement of the connecting arm (4) can be switched to move freely so as to provide free pivotability during the driving mode.

10. Device according to one of Claims 1 to 9, **characterized in that** the connecting arm (4) is provided above or below the coupling body, and the axis of rotation of the drawbar eye and the pivot axis of the connecting arm (4) are aligned with each other.

11. Device according to one of Claims 1 to 10, **characterized in that** the connecting arm (4) is designed such that it is curved approximately in an S-shaped manner, and, when the connecting arm (4) is pivoted in in the rest position, the rear side of the contact device (5) bears at least approximately against the rear of the towing vehicle.

12. Device according to one of Claims 1 to 11, **characterized in that** the drive for pivoting the connecting arm (4) is designed as a rack (8) which can be displaced by actuation by a force and which drives a toothed wheel segment (9) which interacts with the connecting arm and, in particular, is fitted to the connecting arm.

13. Device according to one of Claims 1 to 12, **characterized in that** the drive is of hydraulic or pneumatic design.

## Revendications

1. Dispositif (1) pour l'accouplement automatisé de liaisons électriques et/ou pneumatiques et/ou hydrauliques entre un véhicule remorqué et un véhicule tracteur, avec un dispositif d'accouplement prévu pour accoupler un véhicule remorqué au véhicule tracteur dans lequel, à l'arrière du véhicule tracteur, il est prévu un corps d'attelage avec une ouverture de mâchoires (2) dans laquelle un anneau d'attelage d'un timon (3) prévu sur le véhicule remorqué peut être introduit et avec un axe d'attelage pouvant être actionné pour le verrouillage détachable et traversant alors l'anneau d'attelage, **caractérisé en ce que** pour l'accouplement automatisé des liaisons électriques et/ou pneumatiques et/ou hydrauliques une fois la liaison mécanique déjà établie entre anneau d'attelage et ouverture de mâchoires/axe d'attelage, il est prévu au niveau du corps d'attelage un bras de liaison (4) disposé au niveau du corps d'attelage, pivotant latéralement sous l'action d'une force et pouvant pivoter contre l'arrière du véhicule tracteur dans une position de repos lorsque le véhicule remorqué est dételé, qui présente côté extrémité un dispositif de contact (5) coopérant avec un élément de contact (6) prévu sur le timon pour établir la liaison voulue par mise en contact de l'élément de contact (6) et du dispositif de contact (5), l'élément de contact (6) et le dispositif de contact (5) étant eux-mêmes chacun reliés plus loin par l'intermédiaire de connexions correspondantes.

2. Dispositif selon la revendication 1, **caractérisé en ce que** l'élément de contact (6) et/ou le dispositif de contact (5) présente/présentent des zones latérales chanfreinées pour le centrage.

3. Dispositif selon la revendication 1 ou 2, **caractérisé en ce que** la direction de liaison de l'élément de contact (6) et du dispositif de contact (5) est orientée en fonction de la direction de pivotement du bras de liaison (4).

4. Dispositif selon la revendication 1 ou 2, **caractérisé en ce que** la direction de liaison de l'élément de contact (6) et du dispositif de contact (5) est orientée orthogonalement à la direction de pivotement du bras de liaison (4).

5. Dispositif selon la revendication 4, **caractérisé en ce que** l'élément de contact (6) et/ou le dispositif de contact (5) est/sont conçu(s) déplaçables l'un vers l'autre dans la direction de liaison.

6. Dispositif selon la revendication 1 ou 2, **caractérisé en ce que** la direction de liaison de l'élément de contact (6) et du dispositif de contact (5) est orientée orthogonalement au plan défini par la direction de pivotement du bras de liaison (4).

7. Dispositif selon la revendication 6, **caractérisé en ce qu'**au moins le dispositif de contact (5), en particulier tout le bras de liaison (4) est conçu déplaçable, en particulier pivotant, dans la direction de liaison.

8. Dispositif selon l'une des revendications 1 à 7, **caractérisé en ce que** le dispositif de contact (5) est monté de manière détachable sur le bras de liaison (4).

9. Dispositif selon l'une des revendications 1 à 8, **caractérisé en ce qu'**au moins une direction de déplacement du bras de liaison (4) peut être rendue librement mobile pour permettre un libre pivotement pendant la marche du véhicule.

10. Dispositif selon l'une des revendications 1 à 9, **caractérisé en ce que** le bras de liaison (4) est prévu au-dessus ou au-dessous du corps d'attelage et l'axe de rotation de l'anneau d'attelage et l'axe de pivotement du bras de liaison (4) sont alignés l'un avec l'autre.

11. Dispositif selon l'une des revendications 1 à 10, **caractérisé en ce que** le bras de liaison (4) est conçu courbé approximativement en forme S et la face arrière du dispositif de contact (5) est appliquée au moins approximativement contre l'arrière du véhicule tracteur lorsque le bras de liaison (4) est rentré par pivotement dans la position de repos.

12. Dispositif selon l'une des revendications 1 à 11, **caractérisé en ce que** l'entraînement pour faire pivoter le bras de liaison (4) est réalisé sous la forme d'une crémaillère (8) déplaçable sous l'action d'une force qui entraîne un segment de roue dentée (9) coopérant avec le bras de liaison, en particulier monté sur le bras de liaison.

13. Dispositif selon l'une des revendications 1 à 12, **caractérisé en ce que** l'entraînement est réalisé sous forme hydraulique ou pneumatique.
